# EUROPEAN PATENT SPECIFICATION

(11) **EP 2 648 474 B1**
(45) Date of publication and mention of the grant of the patent: **21.11.2018**
(21) Application number: 11845327.3
(22) Date of filing: 12.10.2011
(51) Int. Cl.: H04W 88/02, H04B 1/3827

(54) **MOBILE TERMINAL AND RADIO FREQUENCY STRUCTURE THEREOF**
MOBILES ENDGERÄT UND FUNKFREQUENZSTRUKTUR DAFÜR
TERMINAL MOBILE ET STRUCTURE RADIOFRÉQUENCE ASSOCIÉE

(30) Priority: 02.12.2010 CN 201010570708
(43) Date of publication of application: 09.10.2013
(73) Proprietor: Huizhou TCL Mobile Communication Co., Ltd, Zhongkai Hi-Tech Development District Huizhou Guangdong 516006 (CN)
(72) Inventor: BAI, Jian, Huizhou Guangdong 516006 (CN)
(74) Representative: Petraz, Gilberto Luigi
(86) International application number: PCT/CN2011/080701
(87) International publication number: WO 2012/071948

(56) References cited:
- EP-A2- 1 083 622
- CN-A- 1 761 164
- CN-A- 101 375 526
- CN-A- 102 006 678
- CN-Y- 201 388 196
- US-A1- 2005 245 202
- US-A1- 2006 121 865

## Description

### FIELD OF THE INVENTION

The present invention relates to a field of mobile terminal, and more particularly relates to a mobile terminal with multiple antennas and a radio frequency structure thereof.

### BACKGROUND OF THE INVENTION

Currently, the mobile telecommunication is in a third generation (3G) era, and there are various 3G mobile terminals released in the market. However, there are still ample users using a second generation (2G) telecommunication network. Especially in countries or regions implementing Global System for Mobile communications (GSM) and Wideband Code Division Multiple Access (WCDMA) progressive path, 2G network users still occupied a very large portion. Therefore, most of the mobile terminals are adopting 2G and 3G dual modes. The features of the 2G and 3G dual modes are to support multiple frequency bands, such as four frequency bands in GSM (GSM850, GSM900, Digital Cellular System (DCS) and Personal Communications Service (PCS)) and two frequency bands in WCDMA dual band (BC1/BC8 or BC2/BC5). This design pattern is a significant trial for designing terminal antennas.

Because the tendency of the design in the current mobile terminal is light and thin, the supporting frequency bands are increased but the space for the terminal antenna is smaller and smaller. Even a speaker, a telephone receiver and a camera are put in the space of the antenna. Because the feature techniques, such as the height of the antenna and the open space of the antenna, are restricted, the performance of the mobile terminal antenna is seriously decreased. It is difficult for the single antenna structure used in the current mobile terminal to satisfy the requirement of the multiple frequency bands.

Therefore, a need is arisen to provide a mobile terminal and a radio frequency (RF) structure thereof optimizing to match the multiple antennas structure so as to satisfy the requirements of multiple frequency bands, smaller sizes, good RF performance and lower costs for the modern RF structure of the mobile terminal.

In addition, US 2006/121865 A1 describes a cellular phone and a method for receiving and transmitting signals of different frequency bands and wireless standards that utilize an architecture that allows the use of switches that are less expensive and less lossy than switches used in comparable cellular phones. The architecture also allows the use of only narrow-banded antennas, rather than a combination of a narrow-banded antenna and a harmonic antenna. As a result, the performance of the cellular phone can be significantly improved.

In addition, US 2005/245202 A1 describes a versatile antenna switch architecture. In this case, an RF front-end having two antenna switches is operatively connected to two separate antennas. The antenna switches can be used to route various transmit and receive paths to the antennas. In particular, one of the antenna switches has three switch positions for use in selectively routing the 2 GHz receive paths, and another antenna switch has six switch positions for use in selectively routing the 2 GHz transmit paths and the 1 GHz signal paths. With the disclosed topology, the front-end can be used to support GSM and W-CDMA communications in many regional variants in the world. The supported variants include US1, US2, EU1, EU2 and EU/US modes. The same front-end can also be used in BT/WLAN connectivity. For MIMO purposes, one more antenna switch for the 2 GHz receive paths can be added to the same RF front-end.

In addition, EP 1083622 A2 describes an antenna sharing switching circuitry for multi-transceiver mobile terminal and a method therefor. In this case, an antennas sharing scheme for diversity antennas in a dual-radio hand-held terminal such as IP (Internet Protocol) based WLAN (Wireless Local Area Network)/BT (Bluetooth) hand-held terminal is introduced.

### SUMMARY OF THE INVENTION

The present invention solves the technical problem by providing a mobile terminal and a radio frequency structure thereof optimizing to match the multiple antennas structure so as to reduce cost and enhance RF performance.

The invention is defined by the independent claim 1. Additional embodiments are described by the dependent claims 2-4.

According to the description above, the RF structure of the mobile terminal provided in the present invention satisfies the requirement (such as multiple frequency bands, small dimension, and low cost) of the RF structure of the mobile terminal and also enhances the RF performance.

### DESCRIPTION OF THE DRAWINGS

The above and other aspects, features and advantages of certain exemplary embodiments of the present invention will be more apparent from the following description taken in conjunction with the accompanying drawing. So that those having ordinary skill in the art to which the subject invention pertains will more readily understand how to employ the subject invention, preferred embodiments thereof will be described in detail herein below with reference to the drawings, wherein:
FIG. 1 is a structural block diagram illustrating a radio frequency (RF) structure of a mobile terminal in a embodiment not part of the present invention;
FIG. 2 is a structural block diagram illustrating the RF structure of the mobile terminal in a preferred embodiment of the present invention; and
FIG. 3 is a structural view illustrating the mobile terminal in the embodiment of the present invention.

### DETAILED DESCRIPTION OF THE PREFERRED EMBODIMENTS

In the following detailed description of the preferred embodiments, reference is made to the accompanying drawings which form a part hereof, and as shown by way of illustration specific embodiments in which the invention may be practiced. The directional terminology is used for purposes of illustration and is in no way limiting the present invention.

The present invention is to provide a mobile terminal and a radio frequency structure thereof. Practically, the radio frequency structure of the mobile terminal in the present invention is designed in accordance with a scheme of multiple antennas. All of the frequency bands are divided into N portions in accordance with the properties of the frequency bands, and the mobile terminal is accordingly designed to have N antennas, and N antenna switches are allocated. The frequency bands with different frequency band properties are fed to the different antennas through the antenna switches, and N is an integral, which is equal to or greater than 2.

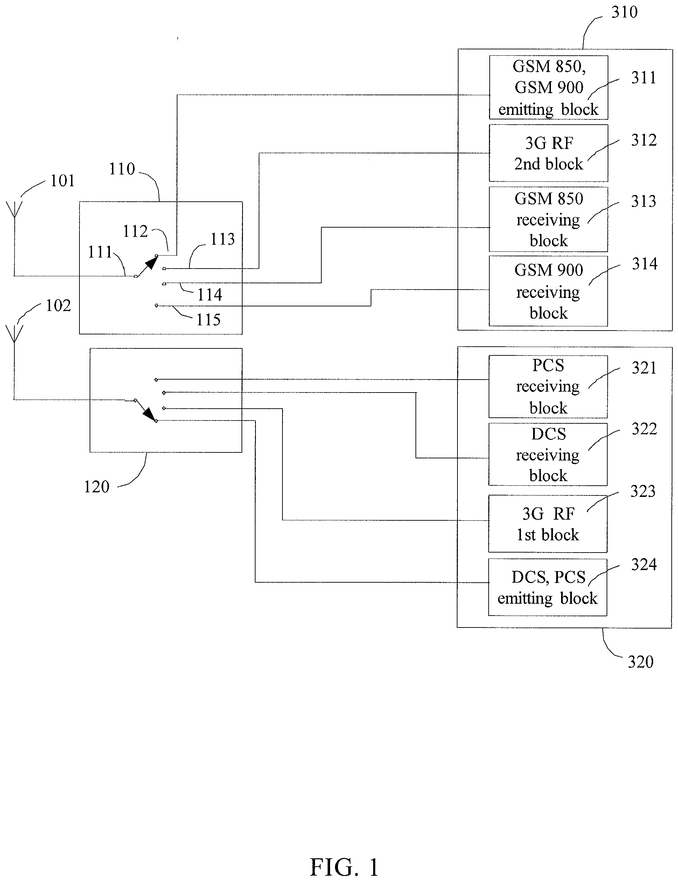

FIG. 1 is a structural block diagram illustrating a radio frequency (RF) structure of a mobile terminal in a embodiment not part of the present invention.

As shown in FIG. 1 the most frequently used frequency bands: WCDMA BC1/BC8 and four frequency bands of GSM are described herein as examples. The RF structure of the mobile terminal in the present invention includes frequency band modules 310 and 320, antennas 101 and 102 and antenna switches 110 and 120.

Specifically, all of the frequency bands are divided into two portions in accordance with the frequency band properties. So there are a low frequency band module 310 and a high frequency band module 320. Each of the frequency band modules includes a plurality of frequency band sets, each of the frequency band sets supports a plurality of frequency bands, and each of the frequency bands includes a plurality of frequency points. Practically, the frequency band module 310 includes the frequency band sets 311, 312, 313 and 314, and the frequency band set 311 is a GSM850 and GSM900 emitting block, the frequency band set 312 is a 3G RF second block, the frequency band set 313 is a GSM850 receiving block, and the frequency band set 314 is a GSM900 receiving block. The frequency band module 320 is the second frequency band module, such as a high frequency band module and includes frequency band sets 321, 322, 323 and 324. The frequency band set 321 is a Personal Communications Service (PCS) receiving block, the frequency band set 322 is a Digital Cellular System (DCS) receiving block, the frequency band set 323 is a 3G RF first block, and the frequency band set 324 is DCS, PCS emitting block. It should be noted that the low frequency band module, the high frequency band module and the frequency band set thereof are stated herein for example, and the frequency bands can be arbitrarily divided into different frequency modules in accordance with the frequency band properties. It is not to limit that only two frequency band modules in the previous description can be used and the frequency band sets in each of the frequency band modules can be adjusted in accordance with the practical implement in the present invention.

The two antennas are provided to receive or emit multiple RF signals accordingly. The antenna 101 is a low frequency band antenna which matches the frequency band module 310 and the antenna 102 is a high frequency band antenna which matches the frequency band module 320.

The antenna switch 110 connects the receiving and emitting signals of the low frequency band module 310 with the antenna 101 and the antenna switch 120 connects the receiving and emitting signals of the high frequency band module 320 with the antenna102. The antenna switches 110 and 120 are many-to-one switches. The practical connection manner of the antenna switch 110 is: a first end 111 of the antenna switch 110 is connected to the antenna 101, and a second end of the antenna switch 110 includes four optional ends 112, 113, 114 and 115 and the four optional ends 112, 113, 114, and 115 are respectively connected to the frequency band sets 311, 312, 313 and 314. The receiving and emitting signals of the low frequency band module 310 are fed to the antenna by the connection between the first end 111 of the antenna switch 110 and the optional ends 112, 113, 114 and 115.

The connective method of the antenna switch 120 is the same as the antenna switch 110 and the detail description thereof is omitted herein.

The signals with the frequency band modules 310 and 320, which include different frequency band properties, are respectively passing through the antenna switch 110 and 120 to the corresponding antennas 101 and 102. The antennas 101 or 102 can be optionally selected to avoid the mutual interruption generated when the antennas 101 and 102 are used at the same time. Therefore, it is optimizing to match the multiple antennas structure to reduce cost and enhance the RF performance.

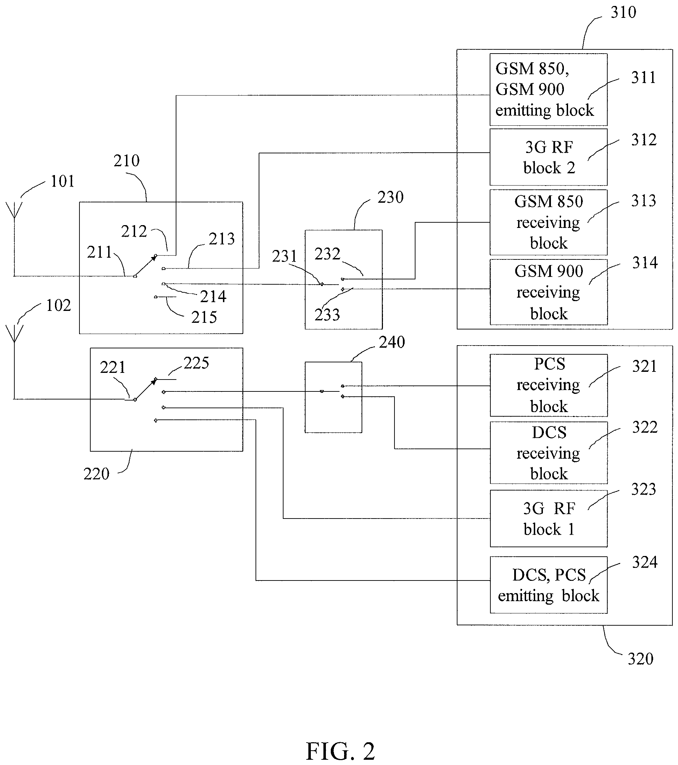

FIG. 2 is a structural block diagram illustrating the RF structure of the mobile terminal in an embodiment of the present invention. As shown in FIG. 2, the difference between the RF structure of the mobile terminal in the second embodiment and the RF structure of the mobile terminal in the first embodiment of FIG. 1 is the design of the antenna switch. Specifically, the RF structure of the mobile terminal includes: frequency band modules 310 and 320, antennas 101 and 102, first antenna switches 210 and 220, and second antenna switches 230 and 240.

The first antenna switches 210 and 220 are four-to-one switches. The first antenna switch 210 is as example to describe the connection method of the first antenna switch. A first end 211 of the first antenna switch 210 is connected to the antenna 101. A second end of the first antenna switch 210 includes four optional ends 212, 213, 214 and 215. The optional ends 212 and 213 are respectively connected to the frequency band sets 311 and 312, the optional end 214 is connected to an end 231 of the second antenna switch 230 and the optional end 215 is floating. The connective method of the first antenna switch 220 is the same as the first antenna switch 210 and the detail description thereof is omitted herein.

The second antenna switches 230 and 240 are two-to-one switches. The second antenna switch 230 is as example to describe the connective method of the second antenna switch. A first end 231 of the second antenna switch 230 is connected to the optional end 214 of the first antenna switch 210. A second end of the second antenna switch 230 includes two optional ends 232 and 233. The optional ends 232 and 233 are respectively connected to the frequency band sets 313 and 314. The connective method of the second antenna switch 240 is the same as the second antenna switch 230 and the detail description thereof is omitted herein.

By the connection between the first end 211 of the first antenna switch 210 and the floating end 215 or the connection between the first end 221 of the second antenna switch 220 and the floating end 225, the antennas 101 or 102 can be optionally selected to avoid the mutual interruption generated when the antenna 101 and 102 are used at the same time.

According to the description above, in the embodiment of the present invention, because the GSM850 receiving block 313 and the GSM900 receiving block 314 are merged together and the PCS receiving block 321 and the DCS receiving block 322 are merged together, only two single pole triple throw (SP3T) switches are required in the whole RF structure and the space and the cost of the RF structure is further optimized.

In addition, in accordance with the condition that the number of the supporting frequency band sets is the same, the first antenna switches 210 and 220 in the present embodiment are configured to operate in coordination with the second antenna switches 230 and 240 to minimize the volume of the RF structure of the mobile terminal in the present invention.

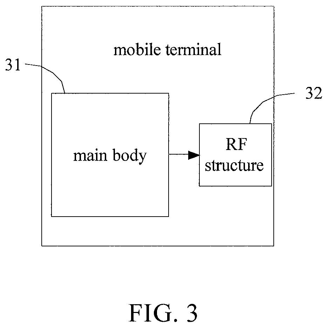

Please refer to FIG. 3, which is a structural view illustrating the mobile terminal in the present invention. The mobile terminal includes a main body 31 and an RF structure 32 provided in the embodiment of the present invention. The main body 31 of the mobile terminal is connected to the RF structure 32 of the mobile terminal, and the RF signal emitting and receiving is performed by the RF structure 32 of the mobile terminal so as to communicate with external environment. The mobile terminal in the present invention can be any terminal devices, such as cellular phone, netbook and so on, in any network protocols.

According to the description above, the RF structure of the mobile terminal provided in the present invention can optimize the design to match the multiple antennas to satisfy the requirement (such as multiple frequency bands, small volume, and low cost) of the RF structure of the mobile terminal to enhance the RF performance.

## Claims

1. An RF structure of the mobile comprising:
a plurality of frequency band modules (310, 320) having different frequency band properties, respectively; each of the frequency band modules (310, 320) including a plurality of RF blocks (311, 312, 313, 314, 321, 322, 323, 324), each of the RF blocks (311, 312, 313, 314, 321, 322, 323, 324) supporting a plurality of frequency bands;
a plurality of antennas (101, 102) respectively configured to match the frequency band modules (310, 320);
a plurality of one-to-many antenna switches (210, 220) configured to connect a plurality of emitting and receiving signals from a frequency band module (310 or 320) with a corresponding matched antenna (101, 102); wherein a first end (211, 221) of each one of the antenna switches (210, 220) is connected to said corresponding matched antenna (101 or 102) and a second end of each one of the antenna switch (210, 220) includes a plurality of optional ends, wherein each optional end is connected to an RF block of the corresponding frequency band module (311, 312, 313, 314, 321, 322, 323 or 324) or is floating; wherein the RF structure is configured so that an optional end (212, 213, 214, 215 or 225) of the many-to-one switch is a floating end (215 or 225) which is connected to the corresponding antenna (101 or 102) through the first end (211, 221) of the antenna switch (210, 220) when one of the other antennas (102 or 101) is connected to one of said RF blocks of the corresponding frequency band module (320,310).

2. The RF structure of the mobile terminal according to claim 1, **characterized in that** the frequency band modules (310, 320) include a first frequency band module (310) and a second frequency band module (320), and the antennas (101, 102) include a first frequency band antenna matching the first frequency band module (310) and a second frequency band antenna matching the second frequency band module (320).

3. The RF structure of the mobile terminal according to claim 2, **characterized in that** the first frequency band module (310) is a low frequency band module and the second frequency band module (320) is a high frequency band module.

4. The RF structure of the mobile terminal according to claim 1, **characterized in that** the antenna switches include a first antenna switch (210, 220) and a second antenna switch (230, 240), a first end (211, 221) of the first antenna switch (210, 220) is connected to the antenna (101 or 102) and a second end (212, 213, 214, 215) of the first antenna switch (210, 220) is connected to an RF block (311,312,313,314,321,322, 323 or 324) or to a first end (231) of the second antenna switch (230, 240) or is floating, and a second end of the second antenna switch (230, 240) is connected to an RF block (311, 312, 313, 314, 321, 322, 323, 324).

## Patentansprüche

1. Funkfrequenzstruktur des mobilen Endgeräts, umfassend:
eine Vielzahl von Frequenzbandmodulen (310, 320), die jeweils unterschiedliche Frequenzbandeigenschaften aufweisen; wobei jedes der Frequenzbandmodule (310, 320) eine Vielzahl von Funkfrequenzblöcken (311, 312, 313, 314, 321, 322, 323, 324) umfasst, wobei jeder der Funkfrequenzblöcke (311, 312, 313, 314, 321, 322, 323, 324) eine Vielzahl von Frequenzbändern unterstützt;
eine Vielzahl von Antennen (101, 102), die jeweils konfiguriert sind, um zu den Frequenzbandmodulen (310, 320) zu passen;
eine Vielzahl von Eins-zu-Vielen-Antennenumschaltern (210, 220), die konfiguriert sind, um eine Vielzahl von Ausgabe- und Empfangssignalen aus einem Frequenzbandmodul (310 oder 320) mit einer entsprechenden abgestimmten Antenne (101, 102) zu verbinden; worin ein erstes Ende (211, 221) jedes einzelnen der Antennenumschalter (210, 220) mit der entsprechenden abgestimmten Antenne (101 oder 102) verbunden ist und ein zweites Ende jedes einzelnen der Antennenumschalter (210, 220) eine Vielzahl von optionalen Enden umfasst, worin jedes optionale Ende mit einem Funkfrequenzblock des entsprechenden Frequenzbandmoduls (311, 312, 313, 314, 321, 322, 323 oder 324) verbunden ist oder schwebend ist; worin die Funkfrequenzstruktur so konfiguriert ist, dass ein optionales Ende (212, 213, 214, 215 oder 225) der Eins-zu-Vielen-Antennenumschalter ein schwebendes Ende (215 oder 225) ist, das mit der entsprechenden Antenne (101 oder 102) über das erste Ende (211, 221) des Antennenumschalters (210, 220) dann verbunden ist, wenn eine der anderen Antennen (102 oder 101) mit einem der Funkfrequenzblöcke des entsprechenden Frequenzbandmoduls (320, 310) verbunden ist.

2. Funkfrequenzstruktur des mobilen Endgeräts nach Anspruch 1, **dadurch gekennzeichnet, dass** die Frequenzbandmodule (310, 320) ein erstes Frequenzbandmodul (310) und ein zweites Frequenzbandmodul (320) umfassen, und die Antennen (101, 102) eine erste Frequenzbandantenne, die zum ersten Frequenzbandmodul (310) passt, und eine zweite Frequenzbandantenne, die zum zweiten Frequenzbandmodul (320) passt, umfassen.

3. Funkfrequenzstruktur des mobilen Endgeräts nach Anspruch 2, **dadurch gekennzeichnet, dass** das erste Frequenzbandmodul (310) ein Niederfrequenzbandmodul ist und das zweite Frequenzbandmodul (320) ein Hochfrequenzbandmodul ist.

4. Funkfrequenzstruktur des mobilen Endgeräts nach Anspruch 1, **dadurch gekennzeichnet, dass** die Antennenumschalter einen ersten Antennenumschalter (210, 220) und einen zweiten Antennenumschalter (230, 240) umfassen, ein erstes Ende (211, 221) des ersten Antennenumschalters (210, 220) mit der Antenne (101 oder 102) verbunden ist und ein zweites Ende (212, 213, 214, 215) des ersten Antennenumschalters (210, 220) mit einem Funkfrequenzblock (311, 312, 313, 314, 321, 322, 323 oder 324) oder mit einem ersten Ende (231) des zweiten Antennenumschalters (230, 240) verbunden ist oder schwebend ist, und ein zweites Ende des zweiten Antennenumschalters (230, 240) mit einem Funkfrequenzblock (311, 312, 313, 314, 321, 322, 323, 324) verbunden ist.

## Revendications

1. Structure radiofréquence de terminal mobile comprenant :
une pluralité de modules de bande de fréquence (310, 320) présentant chacun une caractéristique de bande différente ; chacun des modules de bande de fréquence (310, 320) comprenant une pluralité de blocs RF (311, 312, 313, 314, 321, 322, 323, 324), chacun des blocs RF (311, 312, 313, 314, 321, 322, 323, 324) supportant une pluralité de bandes de fréquence;
une pluralité d'antennes (101, 102) chacune étant conçue pour être adaptée à un module de bande de fréquence respectif (310, 320);
une pluralité de commutateurs d'antenne (210, 220) du type « un-vers-plusieurs » conçus pour connecter une pluralité de signaux d'émission et de réception provenant d'un module de bande de fréquence (310 ou 320) avec une antenne adaptée correspondante (101, 102); dans laquelle une première extrémité (211, 221) de chacun des commutateurs d'antenne (210, 220) est connectée à ladite antenne adaptée correspondante (101 ou 102) et une deuxième extrémité de chacun des interrupteurs d'antenne (210, 220) comprend une pluralité d'extrémités optionnelles, dans laquelle chaque extrémité optionnelle est connectée à un bloc RF du module de bande de fréquence correspondant (311, 312, 313, 314, 321, 322, 323 ou 324) ou est flottante ; dans laquelle la structure RF est conçue de façon qu'une extrémité optionnelle (212, 213, 214, 215 ou 225) du commutateur du type « un-vers-plusieurs » est une extrémité flottante (215 ou 225) connecté à une antenne correspondante (101 ou 102) à travers la première extrémité (211, 221) du commutateur d'antenne (210, 220) lorsque l'une des autres antennes (102 ou 101) est connectée à l'un desdits blocs RF du module de bande de fréquence correspondant (320, 310).

2. Structure RF du terminal mobile selon la revendication 1, **caractérisée en ce que** les modules de bande de fréquence (310, 320) comprennent un premier module de bande de fréquence (310) et un deuxième module de bande de fréquence (320), et les antennes (101, 102) comprennent une première antenne de bande de fréquence adaptée au premier module de bande de fréquence (310), et une deuxième antenne de bande de fréquence adaptée au deuxième module de bande de fréquence (320).

3. Structure RF du terminal mobile selon la revendication 2, **caractérisée en ce que** le premier module de bande de fréquence (310) est un module de bande basse fréquence et le deuxième module de bande de fréquence (320) un module de bande haute fréquence.

4. Structure RF du terminal mobile selon la revendication, **caractérisée en ce que** les commutateurs d'antenne comprennent un premier commutateur d'antenne (210, 220) et un deuxième commutateur d'antenne (230, 240), une première extrémité (211, 221) du premier commutateur d'antenne (210, 220) est connectée à l'antenne (101 ou 102) et une deuxième extrémité (212, 213, 214, 215) du premier commutateur d'antenne (210, 220) est connectée à un bloc RF (311, 312, 313, 314, 321, 322, 323 ou 324) ou à une première extrémité (231) du deuxième commutateur d'antenne (230, 240) ou est flottante, et une deuxième extrémité du deuxième commutateur d'antenne (230, 240) est connectée un bloc RF (311, 312, 313, 314, 321, 322, 323, 324) .
